# FASCICULE DE BREVET EUROPEEN

(11) **EP 1 511 644 B1**
(45) Date de publication et mention de la délivrance du brevet: **24.12.2008**
(21) Numéro de dépôt: 03757130.4
(22) Date de dépôt: 10.06.2003
(51) Int. Cl.: B60J 7/20

(54) **CAPOT DE COFFRE ARRIERE POUR VEHICULE A TOIT REPLIABLE**
KOFFERRAUMDECKEL FÜR FALTDACHFAHRZEUG
REAR DECK HOOD FOR FOLDING ROOF VEHICLE

(30) Priorité: 11.06.2002 FR 0207156
(43) Date de publication de la demande: 09.03.2005
(73) Titulaire: Société Européenne de Brevets Automobiles, 75011 Paris (FR)
(72) Inventeur: QUEVEAU, Gérard, F-79140 Cerizay (FR); QUEVEAU, Paul, F-79140 Montravers (FR); GUILLEZ, Jean-Marc, F-79140 Cirieres (FR)
(74) Mandataire: Pichat, Thierry
(86) Numéro de dépôt international: PCT/FR2003/001724
(87) Numéro de publication internationale: WO 2003/104007

(56) Documents cités:
- EP-A- 1 132 241
- US-B1- 6 186 577

## Description

La présente invention concerne un ensemble de capot de coffre arrière d'un véhicule ayant un toit repliable (escamotable) dans le coffre, et le véhicule en lui-même.

On connaît un ensemble de capot de coffre arrière pour véhicule à toit repliable dans le coffre, du type comprenant, d'une part, un capot qui est relié à la carrosserie du véhicule vers (c'est-à-dire à proximité de) son bord avant par des organes de verrouillage et d'articulation (confondus ou séparés) avant, et vers son bord arrière par des organes de verrouillage et d'articulation arrière, et qui est mobile entre une position fermée, une position ouverte par articulation de l'avant vers l'arrière pour le passage et le rangement du toit replié, et une position ouverte par articulation de l'arrière vers l'avant pour le rangement des bagages, et, d'autre part, des moyens de commande adaptés à commander l'ouverture et la fermeture du capot aussi bien dans un sens que dans l'autre, les organes de verrouillage étant agencés de façon à être verrouillés à l'avant et déverrouillés à l'arrière, pour une ouverture articulée vers l'avant du capot, et inversement pour une ouverture vers l'arrière.

Dans l'exemple de réalisation où verrouillage et articulation sont « confondus », un tel ensemble de capot est décrit dans la demande de brevet FR 2 777 241. Dans cette demande, les moyens de commande sont constitués d'une paire de vérins dont le cylindre est relié de façon pivotante à la carrosserie et dont la tige, mobile entre une position déployée et une position escamotée dans le cylindre, est reliée de façon pivotante au capot. En outre, document US 6186577 divulgue un tel ensemble selon les caractéristiques du préambule de la revendication 1.

Cependant, pour des raisons de géométrie, les moyens de commande de l'art antérieur ne peuvent pas toujours être adaptés à tout type de véhicules, surtout pour des véhicules ayant des coffres de faible volume.

La présente invention vise donc à élargir la gamme de véhicule automobile pouvant être équipé de capot s'ouvrant de l'avant vers l'arrière et de l'arrière vers l'avant en réduisant le coût des ensembles assurant ces ouvertures, et en proposant une solution relativement simple mécaniquement.

Selon l'invention, les moyens de commande du capot du type précité comprennent :
- au moins un bras articulé qui est mobile entre, d'une part, une position repliée dans laquelle le capot est dans sa position fermée et une première position déployée dans laquelle le capot est dans sa position ouverte de l'avant vers l'arrière, et, d'autre part, sa position repliée et une deuxième position déployée dans laquelle le capot est dans sa position ouverte de l'arrière vers l'avant, et
- un actionneur qui est relié au bras articulé et à la carrosserie et qui est adapté à actionner le bras articulé.

En liaison avec ce qui précède, on conseille en outre l'utilisation de moyens de synchronisation adaptés à coordonner la configuration verrouillée ou déverrouillée des organes de verrouillage avec la mise en mouvement du capot entre sa position fermée et ses positions ouvertes, sous la commande du bras articulé, en déverrouillant lesdits organes de verrouillage concernés de façon coordonnée avec le déploiement du bras articulé, tant dans une ouverture vers l'avant que vers l'arrière du capot.

Une telle utilisation des bras articulés optimise leur fonctionnement et limite le nombre des pièces à prévoir pour la manoeuvre du capot dans les deux sens.

En relation avec les buts déjà évoqués, une exigence corollaire concerne :
- le mode d'action des moyens de commandes pour éviter que le bras articulé vienne buter contre la gouttière de coffre et soit trop encombrant,
- l'adaptation de ces moyens de commande à différentes géométries de capot arrière et de carrosserie environnante,
   Aussi, un aspect complémentaire de l'invention conseille que :

- le bras articulé soit disposé à proximité d'une paroi latérale du coffre et comporte, d'une part, une tige supérieure reliée, par l'intermédiaire de son extrémité supérieure, au capot où le bras articulé pivote autour d'un axe supérieur transversal au véhicule, et, d'autre part, une tige inférieure reliée, vers son extrémité inférieur, à la carrosserie de façon à pivoter autour d'un axe inférieur transversal au véhicule, et, vers son extrémité supérieure, à l'extrémité inférieure de la tige supérieure de façon à pivoter autour d'un axe d'articulation intermédiaire transversal au véhicule,
- cet axe intermédiaire étant situé plus à l'avant que la droite qui joint entre eux les axes inférieur et supérieur d'articulation, lorsque le capot est ouvert vers l'arrière,
- l'axe supérieur est situé entre les bord avant et arrière du capot, de préférence plus à l'avant que l'axe inférieur, en position fermée du capot, et/ou
- le bras articulé définit, à l'endroit dudit axe intermédiaire, un angle orienté vers l'avant du véhicule, tant dans la position fermée que dans l'une et l'autre des positions ouvertes du capot.

Dans les 1er et 3ème cas, on résout en particulier le problème précitée de butée pour les véhicules dont le pincement latéral est peu prononcé à distance de l'arrière du véhicule.

Dans le 2ème cas, on contrôle efficacement les mouvements d'ouverture / fermeture du capot, que le mouvement s'effectue vers l'avant ou vers l'arrière, en limitant d'autant plus le risque d'interférence avec la gouttière de coffre que ledit "axe supérieur" est situé dans la moitié longitudinale avant du capot.

Un autre problème pris en compte concerne l'articulation du capot précité lorsque la zone avant haute du coffre est occupée, dans la direction longitudinale du véhicule, sur ou à une profondeur suffisamment importante, voire, transversalement, sur une largeur également suffisamment importante, pour que par exemple une tablette arrière de grandes dimensions, ou un dispositif de protection de la zone d'articulation avant du toit, risque d'interférer avec le mouvement d'ouverture/fermeture des bras d'entraînement du capot, dans une position telle qu'horizontale de cette tablette
ou pendant un basculement de celle-ci nécessaire pour le rangement ou le déploiement du toit.

Dans ce cas (si le pincement arrière du coffre le permet) on conseille, contrairement à ce qui précède, que ledit axe intermédiaire de chaque bras (du type précité) soit situé plus à l'arrière que la droite qui joint entre eux les axes inférieur et supérieur d'articulation lorsque le capot est ouvert vers l'avant, l'axe supérieur étant alors situé entre lesdits bords avant et arrière du capot, de préférence plus à l'arrière que ne l'est l'axe inférieur quand le capot est en position fermée.

Ainsi, on déporte plus vers l'arrière du coffre la zone de déploiement des bras, à l'écart de la zone occupée par la tablette (ou un autre élément « interférant » situé dans la même zone).

Pour optimiser l'efficacité d'action des bras articulés, dans les deux sens d'ouverture, en limitant l'encombrement, il est par ailleurs conseillé que la tige supérieure de chaque bras soit reliée directement au capot vers son extrémité supérieure.

De tels moyens de commande ont l'avantage d'être peu encombrants ce qui permet, d'une part, d'obtenir un gain de place dans le coffre, et, d'autre part, de pouvoir être adaptés sur un plus grand nombre de modèles de véhicule.

D'autres particularités et avantages apparaîtront dans la description qui va suivre.

Aux dessins annexés donnés à titre d'exemples non limitatifs :
- la figure 1 est une vue schématique en coupe longitudinale d'un coffre de véhicule équipé d'un capot conforme à la présente invention, le capot étant en position fermée :

- la figure 2 est une vue semblable à la figure 1, le capot étant en position ouverte vers l'arrière adaptée pour le passage et le rangement du toit replié ;
- la figure 3 est une vue semblable à la figure 1, le capot étant en position ouverte vers l'avant adaptée pour le rangement des bagages ;
- la figure 4 est une vue de dessus d'un coffre arrière, sans le capot ;
- la figure 5 est une vue schématique en coupe longitudinale d'un coffre de véhicule équipé d'un capot conforme à un second mode de réalisation de la présente invention ; et
- la figure 6 est une vue en coupe schématique d'un organe de verrouillage et d'articulation du capot à la carrosserie du véhicule, et
- la figure 7 est une vue semblable à la figure 1, dans une autre réalisation, le capot étant en position fermée (trait plein) ou ouverte vers l'avant ou vers l'arrière, le mouvement d'un bras étant représenté.

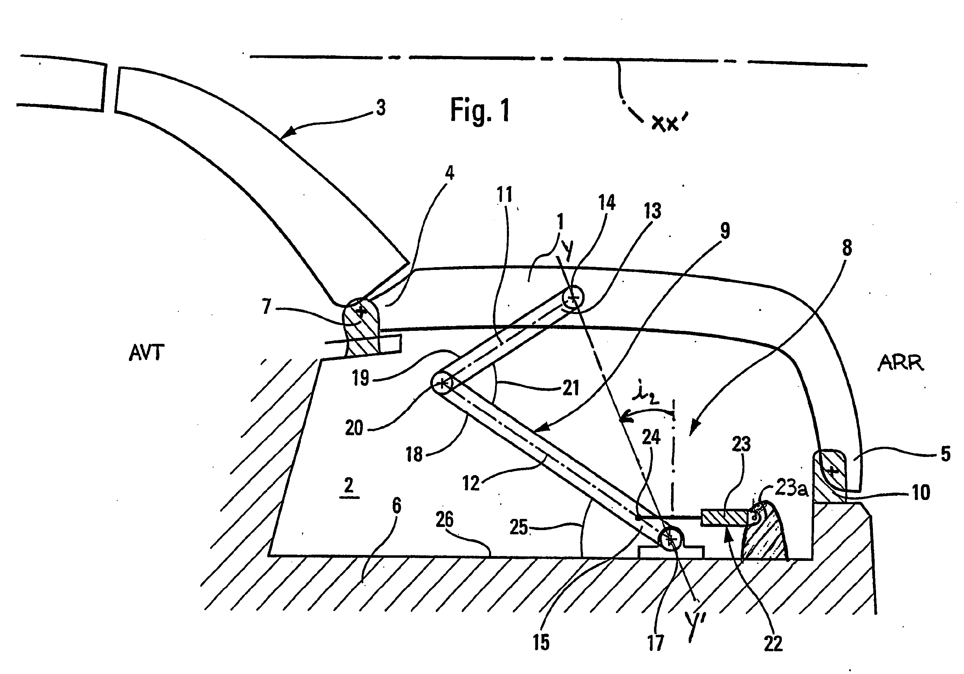

On peut voir à la figure 1, un capot 1 de coffre arrière 2 d'un véhicule qui comporte par ailleurs un toit 3 rigide escamotable dans le coffre 2.

Le capot 1 comprend un bord avant 4 et un bord arrière 5, et est relié de façon articulée à la carrosserie 6 du véhicule à son bord avant 4 (axe de pivotement 7a transversal à xx') par des organes avant 7 et à son bord arrière 5 par des organes arrière 10 (axe de pivotement transversal arrière 10a), les organes avant 7 et arrière 10 ayant pour fonction soit le verrouillage avec articulation, soit le déverrouillage du capot 1 de façon que celui-ci puisse s'ouvrir soit de l'avant vers l'arrière pour le passage et le rangement du toit 3 replié, soit de l'arrière vers l'avant pour un accès du coffre 2 par l'arrière pour le rangement des bagages. De tels organes 7,10 sont parfaitement connus de l'homme du métier et peuvent être, par exemple, semblables aux verrous décrits dans la demande de brevet FR 2 777 241.

Le capot 1 est aussi relié à la carrosserie 6 par des moyens de commande 8 qui sont adaptés à commander l'ouverture et la fermeture du capot 1 dans un sens ou dans l'autre .

Ces moyens sont dissociés des organes de verrouillage et des organes d'articulation, tant à l'avant qu'à l'arrière du capot.

Dans l'exemple illustré aux figures 1 à 4, les moyens de commande 8 comprennent une paire de bras articulés 9 disposés dans le coffre 2, symétriquement par rapport à l'axe longitudinal XX' du véhicule, à proximité immédiate des parois latérales 30 du coffre, pour libérer le volume du coffre.

Chaque bras articulé 9 comporte une tige supérieure 11 et une tige inférieure 12.

La tige supérieure 11 est reliée par son extrémité supérieure 13 au capot 1 de façon à pivoter autour d'un axe supérieur 14 transversal au véhicule (à son axe XX').

La tige inférieure 12 est reliée par son extrémité inférieure 15 à la carrosserie 6 de façon à pivoter autour d'un axe inférieur 17 transversal au véhicule (à son axe XX'). La tige inférieure 12 est reliée par son extrémité supérieure 18 à l'extrémité inférieure 19 de la tige supérieure 11 de façon à pivoter autour d'un axe d'articulation 20 transversal au véhicule (à son axe XX').

Pour une efficacité de fonctionnement dans des cas délicats, on conseille que l'axe 14 soit longitudinalement plus à l'avant que l'axe 17, capot fermé.

De ce fait, quand le capot est fermé, comme on peut le voir à la figure 1, la tige supérieure 11 et la tige inférieure 12 forment un angle saillant 21, et la tige 12 forme un angle aigu 25 avec le fond 26 du coffre 2.

Les moyens de commande 8 comprennent aussi, pour chaque bras articulé 9, un actionneur 22. Cet actionneur 22 est relié au bras articulé 9 et à la carrosserie 6 (par la pièce fixe 23a), et il est adapté à mouvoir le bras articulé 9 et le capot 1.

Dans l'exemple illustré aux figures 1 à 3, l'actionneur est un vérin 22 dont le cylindre 23 est relié de façon pivotante à la carrosserie 6 et dont la tige 24, mobile par rapport au cylindre 23 entre une position déployée et une position escamotée, est reliée de façon pivotante au bras articulé 9, et plus précisément à la tige inférieure 12.

De façon à permettre l'ouverture du capot 1 dans un sens ou dans l'autre, l'actionneur 22 est agencé par rapport au bras articulé 9 de sorte que l'angle saillant 21 et l'angle aigu 25 augmentent quand le capot 1 passe de sa position fermée à l'une ou l'autre de ses positions ouvertes.

Dans le présent exemple, de façon à permettre l'ouverture du capot 1 dans un sens ou dans l'autre, quand le capot 1 est en position fermée, l'axe d'articulation 20 est dirigé vers l'avant du véhicule (AVT sur la figure 1), le vérin 22 est situé entre le bras articulé 9 et le bord arrière 5 du capot 1, et la tige 24 du vérin 22 est en position déployée. De ce fait, lors de l'actionnement des moyens de commande 8, pour mettre le capot 1 dans l'une de ses deux positions ouvertes, la tige 24 du vérin 22 rentre dans le cylindre 23 et tire la tige inférieure 12 du bras articulé 9 y compris l'axe d'articulation 20, vers l'arrière du véhicule (ARR). Ainsi, l'angle saillant 21 augmente et le capot 1 s'ouvre.

Pour ouvrir le capot 1 de l'avant vers l'arrière, suite à la commande de l'utilisateur, les verrous avant 7 sont déverrouillés, puis, la tige 24 du vérin 22 rentre dans le cylindre 23, ce qui entraîne l'ouverture du capot 1 de l'avant vers l'arrière. Pour ouvrir le capot 1 de l' arrière vers l'avant, suite à la commande de l'utilisateur, les verrous arrière 10 sont déverrouillés, puis, la tige 24 du vérin 22 rentre dans le cylindre 23, ce qui entraîne l'ouverture du capot 1 de l'arrière vers l'avant.

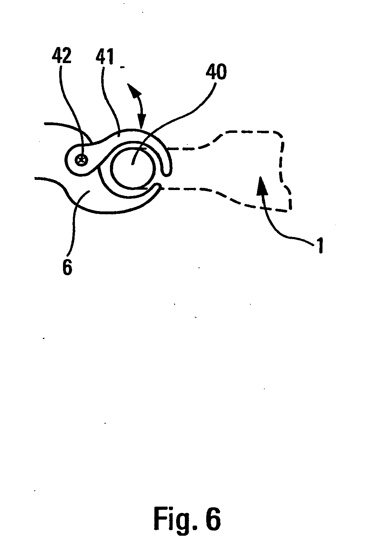

Comme on peut le voir à la figure 6, chaque verrou avant 7 et arrière 10 comprend, d'une part, un premier organe de liaison formé par une barre 40 qui est portée par le capot 1, et, d'autre part, un second organe de liaison formé par un crochet 41 qui est porté par la carrosserie et qui est mobile par rapport à celle-ci, autour d'un axe de pivotement 42, entre une position de déverrouillage dans laquelle, quand le capot 1 est en position fermé, le crochet est disposé par rapport à la barre 40 de façon à permettre le dégagement de celle-ci pendant l'ouverture du capot, et une position de verrouillage dans laquelle, le capot 1 étant en position fermée, la barre 40 est logée dans le creux du crochet 41 épousant la forme cylindrique de la barre 40 qui forme un arbre de pivotement autour duquel le capot est adapté à pivoter.

Par ailleurs, le véhicule comprend des moyens de synchronisation 43 qui sont adaptés à coordonner la configuration des organes de verrouillage et d'articulation 7,10 avec la mise en mouvement du capot entre sa position fermée et ses positions ouvertes : quand l'utilisateur actionne l'ouverture du capot 1 de l'avant vers l'arrière, les moyens de synchronisation 43, préalablement à tout mouvement d'ouverture du capot 1, entraînent les crochets 41 des verrous avant 7 dans leur position de déverrouillage et maintiennent les crochets 41 des verrous arrière 10 dans leur position de verrouillage. Quand l'utilisateur actionne l'ouverture du capot 1 de l'arrière vers l'avant, les moyens de synchronisation 43, préalablement à tout mouvement d'ouverture du capot 1, entraînent les crochets 41 des verrous arrière 10 dans leur position de déverrouillage et maintiennent les crochets 41 des verrous avant 7 dans leur position de verrouillage. Et, dans un cas comme dans l'autre, l'action sur les verrous est coordonnée avec le déploiement des bras 9.

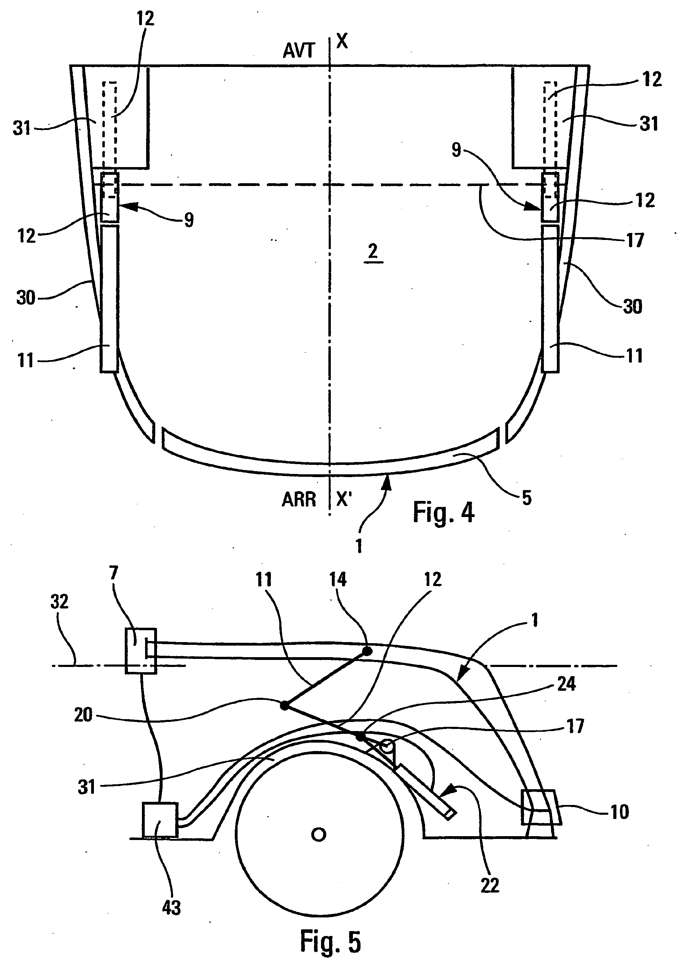

En général, comme on peut le voir à la figure 4, les parois latérales 30 de la carrosserie délimitant le coffre arrière 2 se rapprochent les unes des autres vers l'arrière, de sorte que le coffre arrière 2 est plus large à sa partie avant qu'à sa partie arrière.

Afin d'obtenir une ouverture maximale du capot 1 dans un sens comme dans l'autre, il est préférable que la liaison de la tige supérieure 11 avec le capot 1 se situe sensiblement au milieu du capot 1, dans la direction longitudinale XX' du véhicule.

Les moyens de commande utilisés dans l'art antérieur sont constitués par des vérins qui sont articulés directement à la carrosserie et au capot et qui doivent avoir une forte amplitude de mouvement afin de conférer au capot un fort débattement.

Dans le mode de réalisation illustré aux figures 1 à 3, les moyens de commande 8 sont conformés de façon à avoir un débattement faible pour les parties situées dans le coffre arrière 2, tout en permettant au capot 1 d'avoir un débattement important pour son ouverture dans un sens comme dans l'autre.

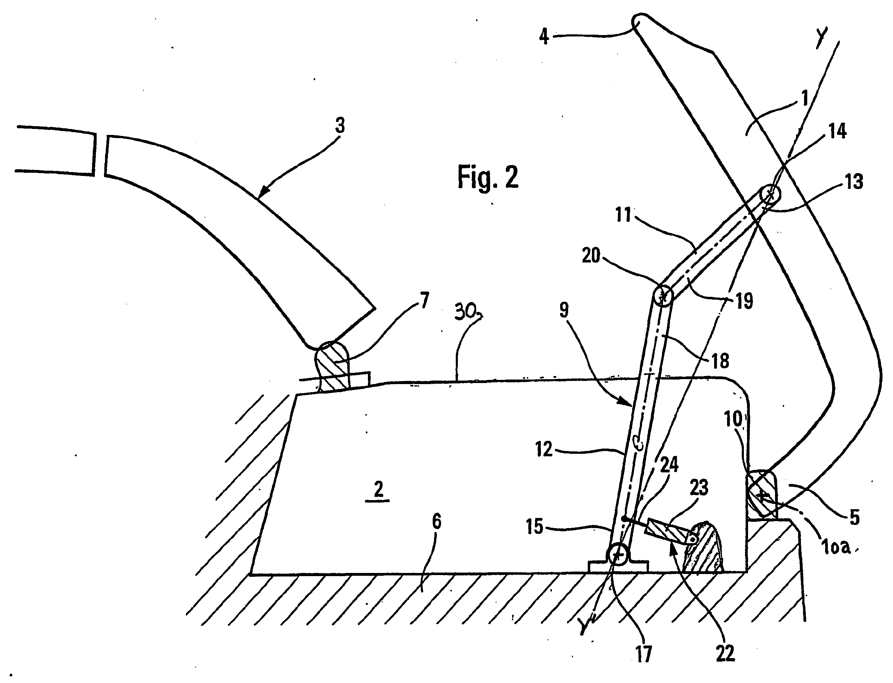

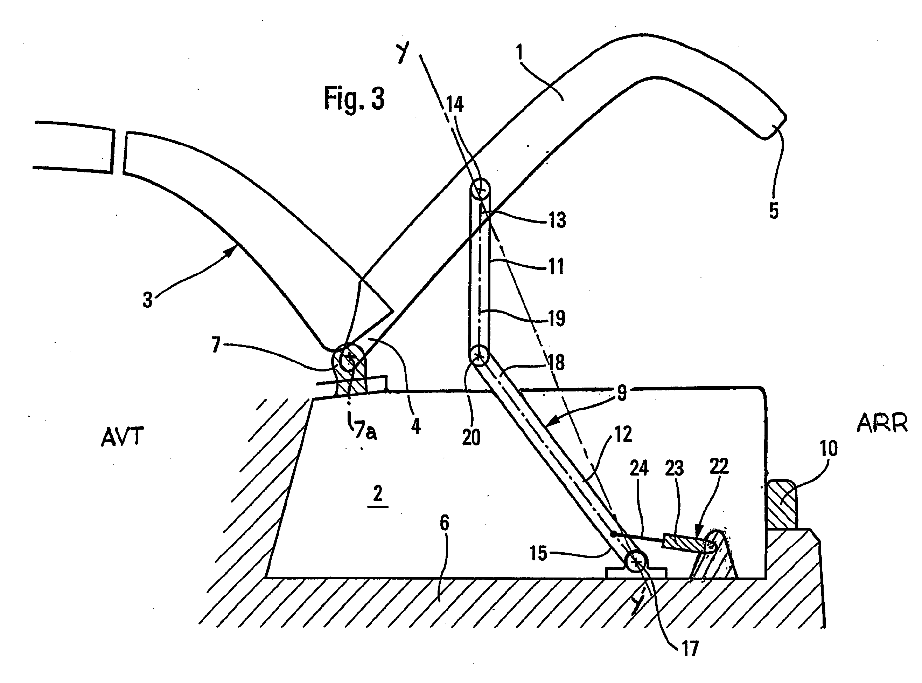

Comme on peut le voir aux figures 2 et 3, chaque bras articulé 9 est conformé de sorte que, quand le capot 1 est ouvert de l'avant vers l'arrière ou de l'arrière vers l'avant, l'extrémité supérieure 18 de la tige inférieure 12 (la plus longue) fait saillie hors du coffre arrière 2 dans la direction verticale, c'est à dire qu'elle est située au-dessus du plan (typiquement sensiblement horizontal) d'ouverture 32 du coffre arrière 2 qui est défini par l'extrémité supérieure des parois latérales 30 (ou gouttière) de ce coffre. Ainsi, quand le capot 1 est ouvert, que ce soit de l'avant vers l'arrière ou de 1' arrière vers l'avant, l'ensemble de la tige supérieure 11 est situé au dessus du plan d'ouverture 32. De ce fait, la tige supérieure 11, de préférence en grande partie, voire en totalité, peut s'étendre, quand le capot 1 est ouvert dans un sens ou dans l'autre, hors du coffre arrière 2 dans les directions longitudinale et/ou transversale, c'est à dire, que la projection de la tige supérieure 11 dans le plan d'ouverture peut s'étendre hors du périmètre défini par l'extrémité supérieure des parois latérales 30 (figure 4). On compense ainsi judicieusement l'inconvénient du pincement latéral du coffre, à l'arrière.

De ce fait, il est possible, comme on peut le voir à la figure 4, d'avoir une tige inférieure 12 reliée à la carrosserie 6 par le plancher du coffre arrière 2, à proximité immédiate des parois latérales 30, dans la partie la plus large du coffre arrière 2 même si cette partie est considérablement réduite, limitée vers l'arrière par la courbure des parois latérales 30 et vers l'avant par un logement 31 de roue, le débattement de la tige inférieure 12 étant limitée, d'une part par le logement 31 (la tige inférieure 12 - en tiret à la figure 4 - étant située au dessus d'un logement 31 quand le capot 1 est fermé), et d'autre part, par la courbure des parois latérales 30 (la tige inférieure 12 - en trait continu à la figure 4 - ayant son extrémité supérieure à proximité immédiate de la paroi latérale 30 et étant dans une position sensiblement verticale quand le capot 1 est ouvert).

De plus, comme la tige inférieure 12 a un faible débattement, il est possible d'utiliser un vérin 22 de petites dimensions.

A noter également que tant en position fermée du capot que dans l'une ou l'autre des positions ouvertes (figures 2 et 3), le point intermédiaire d'articulation 20 est situé à l'avant de la droite YY' qui relie les points d'articulation du compas 9 sur le capot et la carrosserie, respectivement.

De préférence le point d'articulation au capot 14 sera situé plus vers l'avant que le point d'articulation à la carrosserie 17, dans l'état fermé du coffre (figure 1).

Quant à l'angle formé par les tiges du compas 9 (c'est à dire les deux tiges 11,12 du bras articulé 9) à l'endroit de l'axe intermédiaire 20, il est conseillé qu'il soit orienté vers l'avant du véhicule (voir figures 1 et 3) dans toutes le positions du capot.

Tout ceci concourt à adapter à de nombreux coffres arrière, même ceux de faible volume ou à ceux dont la géométrie est peu favorable (fort rétrécissement de la largeur du coffre arrière vers l'extrémité arrière du véhicule), un capot 1 pouvant s'ouvrir de l'avant vers l'arrière et de l'arrière vers l'avant : l'articulation intermédiaire 20 passe entre les parois 30 du coffre, ce qu'elle ne pourrait pas faire plus à l'arrière et la faible amplitude de mouvement du vérin 22 et de la tige inférieure 12 est si nécessaire compensée par le mouvement hors du coffre 2 de la tige supérieure 11 qui est reliée longitudinalement vers la moitié du capot 1, ce qui permet à ce dernier d'avoir un débattement important dans un sens comme dans l'autre.

Dans le mode de réalisation illustré à la figure 5, pour des raisons de peu de place disponible dans le coffre arrière 2 du véhicule, la liaison de la tige inférieure 12 avec la carrosserie 6 se fait sur la partie de la carrosserie délimitant le logement 31 pour la roue (la longueur de la tige inférieure 12 est ainsi réduite) et le vérin 22 est disposé le long de la surface sensiblement verticale du logement 31, sous l'axe inférieur 17.

Dans les présents modes de réalisation, les moyens de commande 8 sont entièrement disposés à l'intérieur du coffre arrière 2 quand le capot 1 est en position fermée.

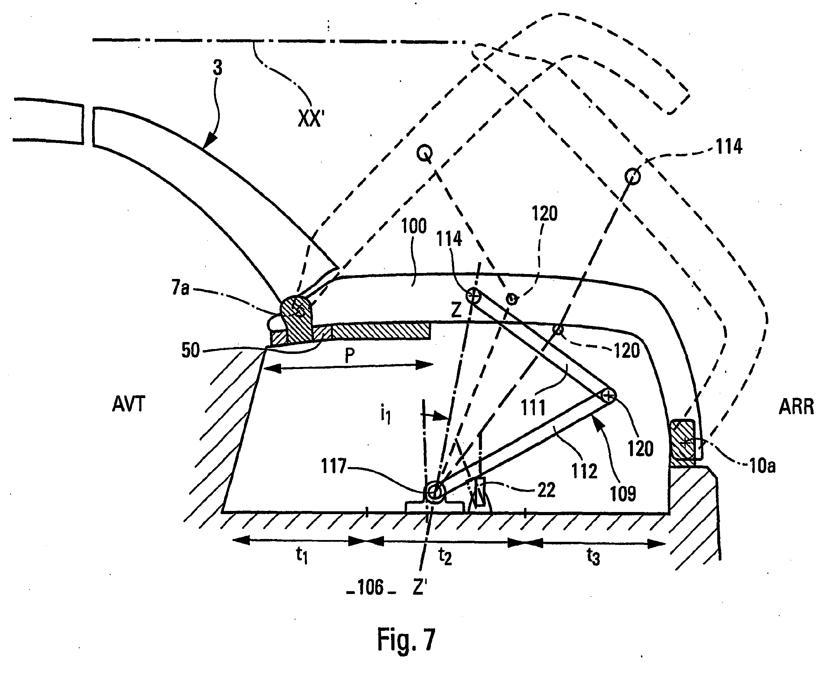

Par un choix judicieux d'emplacement des points de fixation du vérin 22 et des tiges 11,12 du compas 9 à la carrosserie et au capot, on pourra utilement limiter la course du vérin et surtout utiliser un vérin à course unique, dont la tige ne s'étend que sur une seule distance quel que soit le sens d'ouverture du coffre. Pour cela, on conseille de fixer la tige supérieure du bras dans les trois quart avant du capot(figures 5 ou 7).

Sur la figure 7, on traite du cas où par exemple une tablette arrière 50, pivotante autour d'un axe transversal à XX' ou coulissante suivant cet axe, pour permettre le passage du toit, risque d'interférer avec les bras 109 lors de certains au moins des mouvements d'ouverture/fermeture du capot.

Sur la figure, les pièces déjà citées sur les figures précédentes sont repérées avec le même numéro, augmenté d'une centaine.

Compte tenu de la profondeur P d'empiètement de la tablette (ici horizontale) en partie avant (AVT) haute du coffre, le bras pointe en 120 vers l'arrière (ARR) suivant l'axe XX', tant en position repliée (capot 100 fermé) que dépliée (capot totalement ouvert vers l'avant ou l'arrière). Le point 114 d'articulation haut, sur le capot, est (suivant XX') plus à l'arrière que l'articulation basse 117, sur la carrosserie, lorsque le capot est fermé. Dans les trois positions précitées du capot, l'articulation intermédiaire 120 est située à l'arrière de la droite ZZ' qui passe par les axes 114 et 117. L'axe haut 114 est de préférence sensiblement au milieu (tiers intermédiaire, t2) du capot, suivant XX', comme sur les figures 1 à 3 ; de même pour l'axe bas 117 (qui peut être avancé jusqu'au tiers avant, t1), alors qu'il est avantageusement dans le tiers arrière (t3) quand on résout le problème du pincement arrière (fig. 1 à 3). De préférence, l'angle «i1» que fera la droite ZZ' avec la verticale dans l'état fermé du capot sera compris entre 0° et 30°, avec a priori une tige inférieure 112 plus longue que la tige supérieure 111, tandis que dans le premier cas (fig. 1 à 3), l'angle correspondant « i2 » sera avantageusement compris entre 5° et 45°, dans les mêmes conditions.

Ainsi, on favorise l'ouverture du capot dans son basculement vers l'avant.

Bien évidemment la présente invention n'est pas limitée aux modes de réalisation décrit ci-dessus en référence aux figures annexées. Il serait par exemple possible d'utiliser comme actionneur 22 tout autre moyen hydraulique ou électrique, comme par exemple des moteurs axiaux formant l'axe inférieur 17. Il serait aussi possible que les crochets des verrous soient portés par le capot, la barre étant portée par la carrosserie. Il serait également possible d'utiliser plus de deux tiges par bras articulé 9. Cette solution est toutefois plus encombrante et plus difficile à contrôler.

Décaler légèrement l'une par rapport à l'autre la zone d'articulation et la zone de verrouillage du capot, que ce soit à l'avant ou à l'arrière, est également envisageable, comme par exemple à l'avant du coffre dans US 5 655 331 (colonne 2 ligne 39-colonne 3, ligne 15), ou dans FR 02 01232 du 01 Février 2002. Quoi qu'il en soit, dans US'331 comme dans la réalisation schématisée fig.6, les bras articulés 9 (ou les vérins) sont fixés à distance des moyens de d'articulation et de verrouillage, c'est-à-dire ne sont pas fixés à eux, comme cela est le cas pour les « bras partiels » d'extrémité de US 6 186 577 qui s'étendent, de chaque côté du coffre, entre les moyens de pivotement avant et les éléments de verrouillage en prise sur la carrosserie, et leur sont donc directement liés. Dissocier les moyens (vérins, bras articulés) d'assistance à l'ouverture/fermeture du capot des organes de verrouillage et des organes d'articulation peut permettre une amélioration de la conception d'ensemble des mécanismes liés aux mouvements du capot.

## Revendications

1. Ensemble de capot de coffre arrière (2) pour véhicule à toit (3) repliable dans le coffre (2) et présentant un avant, un arrière et un axe longitudinal (XX'), cet ensemble comprenant, d'une part, un capot (1, 100) qui présente un bord avant et un bord arrière, qui est relié à la carrosserie (6) du véhicule de façon articulée et qui est verrouillable par rapport à cette carrosserie (6) de manière libérable, ceci tant vers son bord avant (4) que vers son bord arrière (5), pour être mobile entre une position fermée et une première position ouverte par articulation de l'avant vers l'arrière, autour d'un axe arrière (10a), pour le passage et le rangement du toit (3), ou entre ladite position fermée et une deuxième position ouverte par articulation de l'arrière vers l'avant autour d'un axe avant (7a), pour le rangement des bagages et, d'autre part, des moyens de commande (8) adaptés à commander l'ouverture et la fermeture du capot aussi bien dans un sens que dans l'autre, **caractérisé en ce que** les moyens de commande (8) comprennent au moins un bras articulé (9, 109) qui est mobile entre, d'une part, une position repliée dans laquelle le capot (1, 100) est dans sa position fermée et une première position déployée dans laquelle le capot est dans sa position ouverte de l'avant vers l'arrière, et, d'autre part, sa position repliée et une deuxième position déployée dans laquelle le capot est dans sa position ouverte de l'arrière vers l'avant, et un actionneur (22) qui est relié au bras articulé (9, 109) et à la carrosserie (6, 106) et qui est adapté à actionner le bras articulé.

2. Ensemble de capot selon la revendication 1, **caractérisé en ce que** ladite liaison articulée et verrouillable du capot à la carrosserie, tant vers le bord avant que vers le bord arrière dudit capot, est réalisée par des moyens de liaison (40,41) qui sont dissociés du bras articulé, et, par l'intermédiaire desdits moyens de liaison (40,41), le capot est directement articulé sur la carrosserie du véhicule.

3. Ensemble de capot selon l'une des revendications 1 ou 2, **caractérisé en ce que** ledit bras articulé est articulé sur le capot autour d'un axe situé à l'écart, à l'arrière, dudit axe avant (7a).

4. Ensemble de capot selon l'une des revendications précédentes, **caractérisé en ce que** ledit bras articulé est articulé sur le capot autour d'un axe situé à l'écart, à l'avant, dudit axe arrière (10a).

5. Ensemble de capot selon l'une des revendications précédentes, **caractérisé en ce que** ladite liaison articulée et verrouillable du capot à la carrosserie, tant vers le bord avant que vers le bord arrière dudit capot, comprend des verrous avant (7) et arrière (10) comprenant chacun un premier organe de liaison (40) porté par le capot et un second organe complémentaire de liaison (41) porté par la carrosserie et qui est mobile par rapport à celle-ci entre :
* une position de déverrouillage dans laquelle, quand le capot est en position fermé, le second organe de liaison (41) est disposé de façon à permettre le dégagement par rapport à lui du premier organe de liaison (40) pendant l'ouverture du capot,
* et une position de verrouillage dans laquelle, le capot étant en position fermée, le premier organe de liaison (40) est logé dans le second (41) pour former alors un arbre de pivotement autour duquel le capot est adapté à pivoter.

6. Ensemble de capot selon l'une des revendications précédentes, **caractérisé en ce que** le bras articulé (9) est disposé à proximité d'une paroi latérale (30) du coffre (2) et comporte, d'une part, une tige supérieure (11) reliée, par l'intermédiaire de son extrémité supérieure (13), au capot (1) où le bras articulé (9) pivote autour d'un axe supérieur (14) transversal au véhicule, et, d'autre part, une tige inférieure (12) reliée, vers son extrémité inférieure (15), à la carrosserie (6) de façon à pivoter autour d'un axe inférieur (17) transversal au véhicule, et, vers son extrémité supérieure (18), à l'extrémité inférieure (19) de la tige supérieure (11) de façon à pivoter autour d'un axe d'articulation intermédiaire (20) transversal au véhicule, cet axe intermédiaire (20) étant situé plus à l'avant que la droite (YY') qui joint entre eux les axes inférieur et supérieur d'articulation (14,17), lorsque le capot (1) est ouvert vers l'arrière, l'axe supérieur (14) étant situé entre les bord avant (4) et arrière (5) du capot (1), de préférence plus à l'avant que ne l'est l'axe inférieur (17) quand le capot (1) est en position fermée.

7. Ensemble de capot selon l'une des revendications précédentes, **caractérisé en ce que** le bras articulé (9) est disposé à proximité d'une paroi latérale (30) du coffre (2) et comporte, d'une part, une tige supérieure (11) reliée, par l'intermédiaire de son extrémité supérieure (13), au capot (1) où le bras articulé (9) pivote autour d'un axe supérieur (14) transversal au véhicule, et, d'autre part, une tige inférieure (12) reliée, vers son extrémité inférieure (15), à la carrosserie (6) de façon à pivoter autour d'un axe inférieur (17) transversal au véhicule, et, vers son extrémité supérieure (18), à l'extrémité inférieure (19) de la tige supérieure (11) de façon à pivoter autour d'un axe d'articulation intermédiaire (20) transversal au véhicule, le bras articulé (9) définissant, à l'endroit dudit axe intermédiaire (20), un angle orienté vers l'avant tant dans la position fermée que dans l'une et l'autre des positions ouvertes du capot (1).

8. Ensemble de capot selon l'une des revendications 1 à 5, **caractérisé en ce que** le bras articulé (109) est disposé à proximité d'une paroi latérale du coffre et comporte, d'une part, une tige supérieure (111) reliée, par l'intermédiaire de son extrémité supérieure, au capot (100) où le bras articulé (109) pivote autour d'un axe supérieur (114) transversal au véhicule, et, d'autre part, une tige inférieure (112) reliée, vers son extrémité inférieure, à la carrosserie (106) de façon à pivoter autour d'un axe inférieur (117) transversal au véhicule, et, vers son extrémité supérieure, à l'extrémité inférieure de la tige supérieure (111) de façon à pivoter autour d'un axe d'articulation intermédiaire (120) transversal au véhicule, cet axe intermédiaire étant situé plus à l'arrière que la droite (ZZ') qui joint entre eux les axes inférieur et supérieur d'articulation (114,117), lorsque le capot (100) est ouvert vers l'avant, et l'axe supérieur (114) étant situé entre les bords avant et arrière du capot, de préférence plus à l'arrière que ne l'est l'axe inférieur (117) quand le capot est en position fermée.

9. Ensemble de capot selon l'une des revendications 6 à 8, **caractérisé en ce que** ladite tige supérieure (11) est reliée directement au capot (1) vers son extrémité supérieure (13), de manière à autoriser un pivotement relatif entre cette tige (11) et le capot (1), autour de l'axe supérieur (14).

10. Ensemble de capot selon l'une des revendications 6 à 9, **caractérisé en ce que** le bras articulé (9) est agencé de sorte que, quand le capot (1) est ouvert dans un sens ou dans l'autre, l'extrémité supérieure (18) de la tige inférieure (12) est située au-dessus du plan d'ouverture (32) du coffre arrière (2) qui est défini par l'extrémité supérieure des parois latérales (30) de la carrosserie délimitant le coffre arrière (2), la tige inférieure (12) étant de préférence plus longue que la tige supérieure (11).

11. Ensemble de capot selon la revendication 10,
**caractérisé en ce que** le bras articulé (9) est agencé de sorte que, quand le capot (1) est ouvert dans un sens ou dans l'autre, la projection de la tige supérieure (11) dans le plan d'ouverture s'étend hors du périmètre défini par l'extrémité supérieure des parois latérales (30).

12. Ensemble de capot selon l'une des revendications 6 à 11, **caractérisé en ce que** l'extrémité inférieure (15) de la tige inférieure (12) est articulée à une partie de la carrosserie formant le plancher du coffre arrière (2).

13. Ensemble de capot selon l'une des revendications 6 à 11, **caractérisé en ce que** l'extrémité inférieure (15) de la tige inférieure (12) est articulée à une partie de la carrosserie délimitant un logement (31) d'une roue du véhicule.

14. Ensemble de capot selon l'une des revendications 1 à 13, **caractérisé en ce que** les moyens de commande (8) sont entièrement disposés à l'intérieur du coffre arrière (2) quand le capot (1) est en position fermée.

15. Ensemble de capot selon l'une des revendications 1 à 14, **caractérisé en ce que** le verrouillage libérable du capot (1) vis-à-vis de la carrosserie s'effectue par l'intermédiaire d'organes de verrouillage avant (7) et d'organes de verrouillage arrière (10), le bras (9) étant directement fixé au capot (1), par son extrémité supérieure (13) de façon articulée, à distance desdits axes (7a,10a) d'articulation du capot (1), les organes de verrouillage avant et arrière (7,10) comprenant chacun un premier organe de liaison (40) lié au capot (1) et un deuxième organe de liaison (41) lié à la carrosserie (6), l'un de ces organes de liaison (41) étant mobile entre une position de déverrouillage dans laquelle, quand le capot (1) est en position fermée, il est disposé par rapport à l'autre organe de liaison (40) de façon que ce dernier se dégage de lui pendant l'ouverture du capot (1), et une position de verrouillage dans laquelle, le capot (1) étant en position fermée, il retient l'autre organe de liaison (40).

16. Ensemble de capot selon l'une des revendications 1 à 15, **caractérisé en ce que** l'actionneur (22) est un vérin (22) ayant une certaine course, le bras articulé (9) et ce vérin (22) étant liés de façon articulée respectivement à la carrosserie (6) et étant liés l'un vis à vis de l'autre, en des points (17,23a,24) agencés pour que la course du vérin soit sensiblement identique quel que soit le sens d'ouverture du capot, de l'arrière vers l'avant ou de l'avant vers l'arrière.

17. Véhicule pourvu d'un ensemble de capot selon l'une des revendications 1 à 16.

## Claims

1. A lid assembly for a rear trunk (2) for a vehicle having a roof (3) foldable in the trunk (2) and having a front, a rear and a longitudinal axis (X, X'), said assembly comprising, on one hand, a lid (1, 100) which has a front edge and a rear edge, which is connected in an articulated manner to the bodywork (6) of the vehicle and which is lockable relative to said bodywork (6) in a releasable manner, both in the vicinity of the front edge (4) and in that of the rear edge (5), so as to be movable between a closed position and a first open position by pivoting from said front backwards about a rear axis (10a), for allowing the roof (3) to pass and be stowed, or between said closed position and a second open position by pivoting from the rear forwards about a front axis (7a), for storing the luggage, and on the other hand control means (8) adapted to control opening and closing the lid in one direction as well as in the other one, **characterized in that** the control means (8) comprise at least one articulated arm (9, 109) which is movable between, on one hand, a retracted position in which the lid (1, 100) is in its closed position and a first deployed position in which the lid is in its position open from the front backwards, and on the other hand, said retracted position and a second deployed position in which the lid is in its position open from the rear forwards, and an actuator (22) which is connected to said articulated arm (9, 109) and to the bodywork (6, 106), and which is adapted to actuate the articulated arm.

2. The lid assembly according to claim 1, **characterized in that** said articulated and lockable connection of the lid to the bodywork in the vicinity of the front edge as well as **in that** of the rear edge of said lid, is embodied by connection means (40,41) which are dissociated from the articulated arm, and by means of said connection means (40,41) the lid is articulated directly on the vehicle bodywork.

3. The lid assembly according to one of claims 1 or 2, **characterized in that** said articulated arm is articulated on the lid about an axis which is spaced apart rearwards from the front axis (7a).

4. The lid assembly according to one of the preceding claims, **characterized in that** said articulated arm is articulated on the lid about an axis which is spaced apart forwards from the rear axis (10a).

5. The lid assembly according to one of the preceding claims, **characterized in that** said articulated and lockable connection of the lid to the bodywork in the vicinity of the front edge as well as **in that** of the rear edge of said lid, comprises front (7) and rear (10) locking means each comprising a first coupling member (40) carried by the lid and a second complementary coupling member (41) carried by the bodywork and which is movable relative thereto between
- un unlocking position in which, when the lid is in the closed position, the second coupling member (41) is disposed in a manner such that the first coupling member (40) may be released from it during opening of the lid.
- and a locking position in which, when the lid is in the closed position, the first coupling member (40) is housed in the second one (41) to form then a pivoting axis about which the lid is adapted to pivot.

6. The lid assembly according to one of the preceding claims, **characterized in that** said articulated arm is arranged close to a side wall (30) of the trunk (2) and comprises, on one hand, a top rod (11) connected, by means of its top end (13) to the lid (1) where the articulated arm (9) pivots about a top axis (14) transverse to the vehicle, and on the other hand, a bottom rod (12) connected in the vicinity of its bottom end (15) to the bodywork (6) in a manner such as to pivot about a bottom axis (17) transverse to the vehicle, and, in the vicinity of its top end (18), to said bottom end (19) of the top rod (11) in a manner such as to pivot about an intermediate hinge axis (20) transverse to the vehicle, said intermediate axis (20) being situated further forward than a straight line (YY') that interconnects said bottom and top hinge axes (14, 17) when the lid is open backwards, the top axis (14) being situated between the front edge (4) and the rear edge (5) of the lid (1), preferably further forward than the position of the bottom axis (17) when the lid (1) is in closed position.

7. The lid assembly according to one of the preceding claims, **characterized in that** the articulated arm is arranged close to a lateral wall (30) of the trunk (2) and comprises, on one hand, a top rod (11) connected, by means of its top end (13), to the lid (1) where the articulated arm (9) pivots about a top axis (14) transverse to the vehicle, and, on the other hand, a bottom rod (12) connected, in the vicinity of its bottom end (15), to the bodywork (6) in a manner such as to pivot about a bottom axis (17) transverse to the vehicle, and, in the vicinity of its top end (18), to the bottom end (19) of the top rod (11) in a manner such as to pivot about an intermediate hinge axis (20) transverse to the vehicle, the articulated arm (9) defining, at said intermediate axis (20) an angle pointing forwards in the closed position as well as in either of the open positions of the lid (1).

8. The lid assembly according to one of claims 1 to 5, **characterized in that** the articulated arm is arranged close to a lateral wall of the trunk and comprises, on one hand, a top rod (111) connected, by means of its top end, to the lid (100) where the articulated arm (109) pivots about a top axis (114) transverse to the vehicle, and, on the other hand, a bottom rod (112) connected, in the vicinity of its bottom end, to the bodywork (106), in a manner such as to pivot about a bottom axis (117) transverse to the vehicle, and, in the vicinity of its top end, to the bottom end of the top rod (111) in a manner such as to pivot about an intermediate hinge axis (120) transverse to the vehicle, said intermediate axis being situated further backwards than the straight line (ZZ') that interconnects the bottom and the top axes (114, 117) when the lid (100) is open forwards, and the top axis (114) being situated between the front edge and the rear edge of the lid, preferably further backwards than the position of the bottom axis (117) when the lid is in closed position.

9. The lid assembly according to one of claims 6 to 8, **characterized in that** said top rod (11) is directly connected to the lid (1) in the vicinity of its top end (13) in such a manner as to allow said rod (11) and the lid (1) to pivot relatively to each other about the top axis (14).

10. The lid assembly according to one of claims 6 to 9, **characterized in that** the articulated arm (9) is arranged in such a manner that, when the lid (1) is open in a direction or the other, the top end (18) of the bottom rod (12) is situated above the opening plane (32) of the rear trunk (2) which is defined by the top ends of the bodywork lateral walls (30) which define the rear trunk (2), the bottom rod (12) being preferably longer than the top rod (11).

11. The lid assembly according to claim 10, **characterized in that** the articulated arm (9) is arranged such that, when the lid (1) is open backwards as well as forwards, a projection of the top rod (11) in the opening plane extends beyond a perimeter defined by the top edges of the side walls (30).

12. The lid assemble according to one of claims 6 to 11, **characterized in that** the bottom end (15) of the bottom rod (12) is hinged to a portion of the bodywork that defines a floor for the rear trunk (2).

13. The lid assembly according to one of claims 6 to 11, **characterized in that** the bottom end (15) of the bottom rod (12) is hinged to a portion of the bodywork which defines a housing (31) for a wheel of the vehicle.

14. The lid assembly according to one of claims 1 to 13, **characterized in that** the control means (8) are disposed entirely inside the rear trunk (2) when the lid (1) is in the closed position.

15. The lid assembly according to one of claims 1 to 14, **characterized in that** the releasable locking of the lid (1) relative to the bodywork is carried out by means of front locking members (7) and rear locking members (10), the arm (9) being fixed directly to the lid (1) in an articulated manner by its top end (13), at a distance from said pivoting axes (7a, 10a) of the lid (1), the front and rear locking members (7, 10) each comprising a first coupling member (40) connected to the lid (1) and a second coupling member (41) connected to the bodywork (6), one (41) of said coupling members being mobile between an unlocking position in which, when the lid is in the closed position, it is disposed relative to the other coupling member (40) in a manner such that the latter is released from it during opening of the lid (1), and a locking position in which, the lid (1) being in the closed position, it retains the other coupling member (40).

16. The lid assembly according to one of claims 1 to 15, **characterized in that** the actuator (22) is a jack (22) having a predetermined stroke, said articulated arm (9) and said jack (22) being secured in an articulated manner respectively to the bodywork (6) and being connected to each other at locations (17, 23a, 24) arranged so that the stroke of the jack is substantially identical regardless of the opening direction of the lid, from the rear forwards or from the front backwards.

17. A vehicle equipped with a lid assembly according to one of claims 1 to 16.

## Patentansprüche

1. Kofferraumabdeckeinheit (2) für Fahrzeuge mit in den Kofferraum (2) faltbarem Dach (3) und mit einer Vorderseite, einer Hinterseite und einer Längsachse (XX'), wobei diese Einheit einerseits eine Abdeckung (1, 100) enthält, die einen vorderen Rand und einen hinteren Rand aufweist, die mit der Karosserie (6) des Fahrzeugs gelenkig verbunden und bezüglich dieser Karosserie (6) lösbar verriegelbar ist, und zwar sowohl zu ihrem vorderen Rand (4) als auch zu ihrem hinteren Rand (5) hin, um zwischen einer Schließstellung und einer ersten Öffnungsstellung über eine Schwenkbewegung von vorne nach hinten um eine hintere Achse (10a) herum für das Überführen und das Verstauen des Dachs (3), oder zwischen der Schließstellung und einer zweiten Öffnungsstellung über eine Schwenkbewegung von hinten nach vorne um eine vordere Achse (7a) herum für das Verstauen von Gepäck verstellbar zu sein, sowie andererseits Steuermittel (8), die dazu ausgelegt sind, das Öffnen und Schließen der Abdeckung sowohl in die eine als auch in die andere Richtung zu steuern, **dadurch gekennzeichnet, dass** die Steuermittel (8) zumindest einen Gelenkarm (9, 109) aufweisen, der zwischen einerseits einer Faltstellung, in welcher die Abdeckung (1, 100) sich in ihrer Schließstellung befindet und einer ersten Ausfahrstellung, in welcher die Abdeckung sich in ihrer von vorne nach hinten geöffneten Stellung befindet, und andererseits ihrer Faltstellung und einer zweiten Ausfahrstellung, in welcher die Abdeckung sich in ihrer von hinten nach vorne geöffneten Stellung befindet, verstellbar ist, sowie ein Betätigungsglied (22), das mit dem Gelenkarm (9, 109) und mit der Karosserie (6, 106) verbunden und darauf ausgelegt ist, den Gelenkarm zu betätigen.

2. Abdeckeinheit nach Anspruch 1, **dadurch gekennzeichnet, dass** die gelenkige und verriegelbare Verbindung der Abdeckung mit der Karosserie sowohl zum vorderen Rand als auch zum hinteren Rand der Abdeckung über Verbindungsmittel (40,41) erfolgt, die vom Gelenkarm getrennt sind, wobei über die Verbindungsmittel (40,41) die Abdeckung direkt an die Karosserie des Fahrzeugs angelenkt ist.

3. Abdeckeinheit nach einem der Ansprüche 1 oder 2, **dadurch gekennzeichnet, dass** der Gelenkarm an die Abdeckung um eine Achse herum angelenkt ist, die hinten von der vorderen Achse (7a) entfernt liegt.

4. Abdeckeinheit nach einem der vorangehenden Ansprüche, **dadurch gekennzeichnet, dass** der Gelenkarm an die Abdeckung um eine Achse herum angelenkt ist, die vorne von der hinteren Achse (10a) entfernt liegt.

5. Abdeckeinheit nach einem der vorangehenden Ansprüche, **dadurch gekennzeichnet, dass** die gelenkige und verriegelbare Verbindung der Abdeckung mit der Karosserie sowohl zum vorderen Rand als auch zum hinteren Rand der Abdeckung hin einen vorderen bzw. (7) hinteren (10) Verschluss aufweist, die jeweils ein von der Abdeckung getragenes erstes Verbindungsglied (40) und ein komplementäres zweites Verbindungsglied (41) aufweisen, das von der Karosserie getragen wird und bezüglich dieser verstellbar ist zwischen:
* einer Entriegelungsstellung, in welcher dann, wenn die Abdeckung in Schließstellung ist, das zweite Verbindungsglied (41) so angeordnet ist, dass es die Freigabe des ersten Verbindungsglieds (40) von sich selbst während des Öffnens der Abdeckung gestattet,
* und einer Verriegelungsstellung, in welcher bei Schließstellung der Abdeckung das erste Verbindungsglied (40) in dem zweiten (41) aufgenommen ist, um dann eine Schwenkwelle zu bilden, um welche herum die Abdeckung verschwenkbar ist.

6. Abdeckeinheit nach einem der vorangehenden Ansprüche, **dadurch gekennzeichnet, dass** der Gelenkarm (9) in der Nähe einer Seitenwand (30) des Kofferraums (2) angeordnet ist und einerseits eine obere Stange (11) aufweist, die über ihr oberes Ende (13) mit der Abdeckung (1) verbunden ist, wo der Gelenkarm (9) um eine quer zum Fahrzeug verlaufende obere Achse (14) schwenkt, und andererseits eine untere Stange (12), die an ihrem unteren Ende (15) mit der Karosserie (6) so verbunden ist, dass sie um eine quer zum Fahrzeug verlaufende untere Achse (17) schwenkt, und die an ihrem oberen Ende (18) mit dem unteren Ende (19) der oberen Stange (11) so verbunden ist, dass sie um eine quer zum Fahrzeug verlaufende Zwischengelenkachse (20) schwenkt, wobei die Zwischenachse (20) weiter vorne liegt als die Gerade (YY'), welche die untere und die obere Gelenkachse (14, 17) miteinander verbindet, wenn die Abdeckung (1) nach hinten geöffnet ist, wobei die obere Achse (14) zwischen dem vorderen Rand (4) und dem hinteren Rand (5) der Abdeckung (1), vorzugsweise weiter vorne als die untere Achse (17) liegt, wenn die Abdeckung (1) in Schließstellung ist.

7. Abdeckeinheit nach einem der vorangehenden Ansprüche, **dadurch gekennzeichnet, dass** der Gelenkarm (9) in der Nähe einer Seitenwand (30) des Kofferraums (2) angeordnet ist und einerseits eine obere Stange (11) aufweist, die über ihr oberes Ende (13) mit der Abdeckung (1) verbunden ist, wo der Gelenkarm (9) um eine quer zum Fahrzeug verlaufende obere Achse (14) schwenkt, und andererseits eine untere Stange (12), die an ihrem unteren Ende (15) mit der Karosserie (6) so verbunden ist, dass sie um eine quer zum Fahrzeug verlaufende untere Achse (17) schwenkt, und die an ihrem oberen Ende (18) mit dem unteren Ende (19) der oberen Stange (11) so verbunden ist, dass sie um eine quer zum Fahrzeug verlaufende Zwischengelenkachse (20) schwenkt, wobei der Gelenkarm (9) an der Stelle der Zwischenachse (20) einen Winkel definiert, der sowohl in der Schließstellung als auch in der einen und der anderen Öffnungsstellung der Abdeckung (1) nach vorne gerichtet ist.

8. Abdeckeinheit nach einem der Ansprüche 1 bis 5, **dadurch gekennzeichnet, dass** der Gelenkarm (109) in der Nähe einer Seitenwand des Kofferraums angeordnet ist und einerseits eine obere Stange (111) aufweist, die über ihr oberes Ende mit der Abdeckung (100) verbunden ist, wo der Gelenkarm (109) um eine quer zum Fahrzeug verlaufende obere Achse (114) schwenkt, und andererseits eine untere Stange (112), die an ihrem unteren Ende mit der Karosserie (106) so verbunden ist, dass sie um eine quer zum Fahrzeug verlaufende untere Achse (117) schwenkt, und die an ihrem oberen Ende mit dem unteren Ende der oberen Stange (111) so verbunden ist, dass sie um eine quer zum Fahrzeug verlaufende Zwischengelenkachse (120) schwenkt, wobei die Zwischenachse weiter hinten liegt als die Gerade (ZZ'), welche die untere und die obere Gelenkachse (114, 117) miteinander verbindet, wenn die Abdeckung (100) nach vorne geöffnet ist, wobei die obere Achse (114) zwischen dem vorderen Rand und dem hinteren Rand der Abdeckung, vorzugsweise weiter hinten als die untere Achse (117) liegt, wenn die Abdeckung in Schließstellung ist.

9. Abdeckeinheit nach einem der Ansprüche 6 bis 8, **dadurch gekennzeichnet, dass** die obere Stange (11) an ihrem oberen Ende (13) direkt mit der Abdeckung (1) verbunden ist, so dass sie eine relative Schwenkbewegung zwischen dieser Stange (11) und der Abdeckung (1) um die obere Achse (14) herum zulässt.

10. Abdeckeinheit nach einem der Ansprüche 6 bis 9, **dadurch gekennzeichnet, dass** der Gelenkarm (9) so angeordnet ist, dass dann, wenn die Abdeckung (1) in der einen oder anderen Richtung geöffnet ist, das obere Ende (18) der unteren Stange (12) oberhalb der Öffnungsebene (32) des heckseitigen Kofferraums (2) liegt, die von dem oberen Ende der Seitenwände (30) der Karosserie aufgespannt wird, welche den heckseitigen Kofferraum (2) begrenzen, wobei die untere Stange (12) vorzugsweise länger ist als die obere Stange (11).

11. Abdeckeinheit nach Anspruch 10, **dadurch gekennzeichnet, dass** der Gelenkarm (9) so angeordnet ist, dass dann, wenn die Abdeckung (1) in der einen oder anderen Richtung geöffnet ist, die Projektion der oberen Stange (11) auf die Öffnungsebene außerhalb der Umfangslinie verläuft, die von dem oberen Ende der Seitenwände (30) definiert wird.

12. Abdeckeinheit nach einem der Ansprüche 6 bis 11, **dadurch gekennzeichnet, dass** das untere Ende (15) der unteren Stange (12) an einem Karosserieteil angelenkt ist, der den Boden des heckseitigen Kofferraums (2) bildet.

13. Abdeckeinheit nach einem der Ansprüche 6 bis 11, **dadurch gekennzeichnet, dass** das untere Ende (15) der unteren Stange (12) an einem Karosserieteil angelenkt ist, welches eine Aufnahme (31) für ein Fahrzeugrad begrenzt.

14. Abdeckeinheit nach einem der Ansprüche 1 bis 13, **dadurch gekennzeichnet, dass** die Steuermittel (8) vollständig innerhalb des heckseitigen Kofferraums (2) angeordnet sind, wenn die Abdeckung (1) in Schließstellung ist.

15. Abdeckeinheit nach einem der Ansprüche 1 bis 14, **dadurch gekennzeichnet, dass** die lösbare Verrieglung der Abdeckung (1) gegenüber der Karosserie über vordere Verriegelungsglieder (7) und hintere Verriegelungsglieder (10) erfolgt, wobei der Arm (9) über sein oberes Ende (13) direkt an der Abdeckung (1) im Abstand von den Gelenkachsen (7a, 10a) der Abdeckung (1) gelenkig befestigt ist, wobei die vorderen und hinteren Verriegelungsglieder (7, 10) jeweils ein mit der Abdeckung (1) verbundenes erstes Verbindungsglied (40) und ein mit der Karosserie (6) verbundenes zweites Verbindungsglied (41) aufweisen, wobei eines dieser Verbindungsglieder (41) zwischen einer Entriegelungsstellung, in welcher es dann, wenn die Abdeckung (1) in Schließstellung ist, so bezüglich des anderen Verbindungsglieds (40) angeordnet ist, dass letzteres von diesem während des Öffnens der Abdeckung (1) freikommt, und einer Verriegelungsstellung verstellbar ist, in welcher es dann, wenn die Abdeckung (1) in Schließstellung ist, das andere Verbindungsglied (40) festhält.

16. Abdeckeinheit nach einem der Ansprüche 1 bis 15, **dadurch gekennzeichnet, dass** das Betätigungsglied (22) ein Kraftzylinder (22) mit einem bestimmten Hub ist, wobei der Gelenkarm (9) und dieser Kraftzylinder (22) jeweils gelenkig mit der Karosserie (6) bzw. miteinander in Punkten (17, 23a, 24) verbunden sind, die so vorgesehen sind, dass der Hub des Kraftzylinders identisch ist, unabhängig von der Öffnungsrichtung der Abdeckung, von hinten nach vorne oder von vorne nach hinten.

17. Fahrzeug mit einer Abdeckeinheit nach einem der Ansprüche 1 bis 16.
